# EUROPEAN PATENT APPLICATION

(11) **EP 4 455 092 A1**
(43) Date of publication of application: **30.10.2024**
(21) Application number: 22948868.9
(22) Date of filing: 26.08.2022
(51) Int. Cl.: C01G 53/00, C01G 49/00, H01M 10/054

(54) **POSITIVE ELECTRODE MATERIAL PRECURSOR AND POSITIVE ELECTRODE MATERIAL AND PREPARATION METHODS THEREFOR, AND SODIUM-ION BATTERY**

(30) Priority: 29.06.2022 CN 202210760281
(71) Applicant: Jingmen Gem Co., Ltd, Jingmen, Hubei 448124 (CN); GEM Co., Ltd., Bao'an Center Area, Bao'an, Shenzhen Guangdong 518101 (CN)
(72) Inventor: XU, Kaihua, Jingmen, Hubei 448124 (CN); XUE, Xiaofei, Jingmen, Hubei 448124 (CN); ZHANG, Kun, Jingmen, Hubei 448124 (CN); HUA, Wenchao, Jingmen, Hubei 448124 (CN); LI, Cong, Jingmen, Hubei 448124 (CN); FAN, Liangjiao, Jingmen, Hubei 448124 (CN); LI, Xueqian, Jingmen, Hubei 448124 (CN)
(74) Representative: HGF
(86) International application number: PCT/CN2022/115053
(87) International publication number: WO 2024/000777

(57) **Abstract**

Disclosed in the present disclosure are a positive electrode material precursor and a positive electrode material and preparation methods therefor, and a sodium-ion battery. The positive electrode material precursor comprises an inner core and a shell wrapping the periphery of the inner core, wherein the inner core is NiₓFe_{y}Mn_{1-x-y}(OH)₂, where 0.2 ≤ x ≤ 0.7, and 0.2 ≤ y ≤0.5; the shell is MₐMn₁₋ₐ(OH)₂, where M is nickel or iron, and 0.05 ≤ a ≤ 0.7; and both the inner core and the shell are formed by stacking flaky primary particles. In the positive electrode material precursor provided in the present application, by controlling the components of the inner core and the shell and using a loose structure thereof formed by stacking flaky primary particles in combination, a heterostructure positive electrode material with an O3-phase inner core and a P2-phase shell can be obtained; and due to the synergistic effect of the two-phase structure, the heterostructure positive electrode material has both high capacity and high cycle stability, such that the electrochemical performance of a sodium-ion battery can be further improved. In addition, the preparation method for a positive electrode material provided in the present application is simple, has a relatively low cost, and is suitable for industrial large-scale production.

## Description

### TECHNICAL FIELD

Embodiments of the present application relate to the technical field of battery production-manufacturing, for example, to a positive electrode material precursor, a positive electrode material, preparation methods therefor, and a sodium-ion battery.

### BACKGROUND

Sodium, which possesses similar chemical properties as lithium, is not only abundant in resource reserves but also widely distributed, and therefore, sodium-ion batteries are regarded as the most promising secondary battery alternative to lithium-ion batteries to be widely applied in the field of large-scale energy storage. Moreover, compared with lithium-ion batteries, sodium-ion batteries have cost advantages, and sodium-ion batteries do not contain toxic heavy metals, have a simpler battery structure, are easier to recycle and reuse, which show more potential in sustainable development.

However, because sodium ions have a larger radius than that of lithium ions, the positive electrode material is challenged by complex multiple phase transitions during the charge-discharge processes, the structure is more unstable than that of lithium-ion batteries, and the specific capacity is lower than that of lithium-ion batteries. At present, layered positive electrode materials are usually used as the positive electrode material for sodium-ion batteries, which are mainly divided into the P2 phase and the O3 phase according to the different coordination environments of sodium ions. The P2 phase exists in sodium-deficient compounds with open prismatic channels, which can provide fast ionic conductivity and high structural stability but a low capacity; on the contrary, the O3 phase has a high specific capacity, but its structural stability is poor, which leads to inferior cycling stability; both of them cannot combine high structural stability and high specific capacity. Therefore, it is a key issue of the large-scale application of sodium-ion batteries on how to improve their cycling stability and specific capacity of sodium-ion batteries simultaneously.

CN108987708A discloses a sodium-ion battery positive electrode material, a preparation method therefor, and a sodium-ion battery. The P2-phase substrate of Na_{0.67}Ni_{0.167}Co_{0.167}Mn_{0.67}O₂ is coated with a ZrO₂ layer, and the mass of the coating layer is 1-5% of the mass of the substrate material. A nickel salt, a cobalt salt, and a manganese salt are co-precipitated with Na₂CO₃ and the ammonia complexing agent to obtain a spherical particle precursor, and the spherical particle precursor is calcined to obtain the substrate material of Na_{0.67}Ni_{0.167}Co_{0.167}Mn_{0.67}O₂, and the substrate is mixed with Zr(C₃H₇O)₄ and subjected to evaporation to remove the solvent, so as to obtain the sodium-ion positive electrode material coated with ZrO₂. This method requires evaporating solvent during the coating, has a complicated treatment process, and is unfriendly to the environment.

CN113921809A discloses a P2-type layered sodium-ion battery positive electrode material and a preparation method therefor. The Na ions are located between transition metal layers to form an alkali metal layer, and co-doping occurs at the Na⁺ site and transition metal site, accordingly improving the electrochemical performance of the material. The chemical formula of the positive electrode material is Na_{0.67-x}MₓMn_{1-y}N_{y}O₂, where M = Zn, Al, Mg, K, Ca, or Li; and N = Fe, Cr, V, Ni, Ti, Cu, Nb, or Co. This method quantitatively dopes trace elements via the sol-gel method to realize doping among molecules; however, the material still has a single P2-phase structure, its specific capacity is not high, and at the same time, the sol-gel method is applicable only to laboratory preparation and is not suitable for large-scale production.

CN113292113A discloses an O3-phase layered oxide positive electrode material for sodium-ion batteries and a preparation method therefor. The preparation method includes: dissolving a transition metal salt and a soluble sodium salt in deionized water and mixing to obtain a mixed salt solution; subjecting the mixed salt solution to spray pyrolysis to obtain a sodium oxide-containing precursor; pressing the sodium oxide-containing precursor into a sheet and then performing high-temperature solid-phase sintering to obtain the O3-phase layered oxide positive electrode material. The layered positive electrode material obtained by this preparation method still has a single-phase structure, which cannot solve the problem that the positive electrode material is prone to interlayer slip during the battery charge-discharge processes and has poor structural stability.

Therefore, it is vital for realizing the large-scale application of sodium-ion batteries to improve the cycling stability and specific capacity of the sodium-ion battery positive electrode material at the same time on the basis of a simple preparation process and conducive to the realization of large-scale industrialized production.

### SUMMARY

The following is a summary of the subject matter described in detail herein. This summary is not intended to limit the protection scope of the claims.

An embodiment of the present application provides a positive electrode material precursor, a positive electrode material, preparation methods therefor, and a sodium-ion battery. By controlling the composition of the core and the shell of the positive electrode material precursor, combined with the loose structure assembled by flaky primary particles, the positive electrode material having heterogeneous structure of an O3-phase core and a P2-phase shell can be obtained, furthermore, the effect of cycling stability and specific capacity of the sodium-ion battery positive electrode material improved at the same time can be achieved.

In a first aspect, an embodiment of the present application provides a positive electrode material precursor. The positive electrode material precursor includes a core and a shell wrapped around the core; the core is NiₓFe_{y}Mn_{1-x-y}(OH)₂, wherein 0.2 ≤ x ≤ 0.7, and 0.2 ≤ y ≤ 0.5, and the shell is MₐMn₁₋ₐ(OH)₂, wherein M is nickel or iron, and 0.05 ≤ a ≤ 0.7; the core and the shell are both assembled by flaky primary particles.

The core and the shell of the positive electrode material precursor in the present application have different compositions, and both have loose structure assembled by flaky primary particles. Such a loose structure is favorable for the subsequent diffusion of sodium ions into their interior. By controlling the compositions of the core and the shell of the positive electrode material precursor, and with loose structure assembled by flaky primary particles combined, the positive electrode material having a heterogeneous structure of an O3-phase core and a P2-phase shell can be conducive to obtaining, wherein the O3-phase core can provide high capacity and the P2-phase shell can construct a stable interfacial layer; the synergistic effect of the two structure types improves both specific capacity and cycling stability simultaneously, and thereby greatly improves the electrochemical performance of the positive electrode material. It should be noted that the core and the shell both have a loose structure assembled by flaky primary particles in the present application means that the subunit morphologies of the core and shell both are flaky, which is different from the layered structure defined through crystalline phase, and both the core and the shell are in loose structure, which is also different from the layered structure.

Furthermore, the positive electrode material precursor in the present application can be denoted as NiₓFe_{y}Mn_{1-x-y}(OH)₂@MₐMn₁₋ₐ(OH)₂, which means that MₐMn₁₋ₐ(OH)₂ is coated on the outer surface of NiₓFe_{y}Mn_{1-x-y}(OH)₂.

In the positive electrode material precursor provided by the present application, by controlling the composition of the core and the shell, combined with the loose structure assembled by flaky primary particles, the subsequently formed positive electrode material is promoted to have a heterogeneous structure of an O3-phase core and a P2-phase shell, and thereby achieving the effect of improving the cycling stability and specific capacity of the sodium-ion battery positive electrode material simultaneously.

As a preferred technical solution of the present application, a morphology of the core of the positive electrode material precursor includes a spherical type or a spheroidal type.

Preferably, the core of the positive electrode material precursor has a particle size of 2-4.5 µm, such as 2 µm, 2.5 µm, 3 µm, 3.5 µm, 4 µm, or 4.5 µm; however, the particle size is not limited to the listed values, and other unlisted values within the numerical range are also applicable.

Preferably, a morphology of the positive electrode material precursor includes a spherical type or a spheroidal type.

Preferably, the positive electrode material precursor has a particle size of 2.5-4.5 µm, such as 2.5 µm, 3 µm, 3.5 µm, 4 µm, or 4.5 µm; however, the particle size is not limited to the listed values, and other unlisted values within the numerical range are also applicable.

Furthermore, the particle size of the core of the positive electrode material precursor, and the particle size of the positive electrode material precursor in the present application both refer to the average particle size.

In a second aspect, an embodiment of the present application provides a preparation method for the positive electrode material precursor described in the first aspect. The preparation method includes:
injecting a first metal salt mixed solution, a complexing agent solution, and a precipitant solution simultaneously into a reaction device, carrying out a primary co-precipitation reaction during the injection to obtain the core of the positive electrode material precursor, subsequently injecting a second metal salt mixed solution, the complexing agent solution, and the precipitant solution simultaneously into the reaction device, and carrying out a secondary co-precipitation reaction during the injection to obtain the positive electrode material precursor.

While the primary co-precipitation reaction is being carried out in the present application, the first metal salt solution, the complexing agent solution, and the precipitant solution are injected into the reaction device simultaneously at their respective flow rates; the injection is accompanied along with the primary co-precipitation reaction, and the primary co-precipitation reaction is finished when the injection of components stops, instead of starting the co-precipitation reaction by adding all the required first metal salt solution, complexing agent solution, and precipitant solution to the reaction device; similarly, the operation process of the secondary co-precipitation reaction in the present application is the same as the operation process of the primary co-precipitation reaction. In other words, the primary co-precipitation reaction and the secondary co-precipitation reaction in the present application are both carried out in the manner of continuous injection and continuous reaction.

Due to the step-by-step co-precipitation process of continuous injection and continuous reaction employed in the present application, the compositions of the core and the shell of the positive electrode material precursor are effectively controlled, and meanwhile, the mixed solution inside the reaction device is more effectively regulated in the precipitant concentration and complexing agent concentration during the co-precipitation process, thereby regulate the balance of the crystal nucleation rate and growth rate, and accordingly the core and the shell are then formed into the loose structure assembled by flaky primary particles.

As a preferred technical solution of the present application, the first metal salt mixed solution is formulated by mixing a nickel salt, an iron salt, a manganese salt, and a solvent.

Preferably, metal ions of the first metal salt mixed solution have a total concentration of 1-4 mol/L, such as 1 mol/L, 1.5 mol/L, 2 mol/L, 2.5 mol/L, 3 mol/L, 3.5 mol/L, or 4 mol/L; however, the total concentration is not limited to the listed values, and other unlisted values within the numerical range are also applicable.

Preferably, the nickel salt, the iron salt, and the manganese salt have a molar ratio of x: y: (1-x-y), wherein 0.2 ≤ x ≤ 0.7 and 0.2 ≤ y ≤ 0.5; for example, x may be 0.2, 0.3, 0.4, 0.5, 0.6, or 0.7, and y may be 0.2, 0.3, 0.4, or 0.5.

Preferably, the nickel salt includes any one of nickel sulfate, nickel chloride, or nickel nitrate.

Preferably, the iron salt includes ferrous sulfate or ferrous chloride.

Preferably, the manganese salt includes any one of manganese sulfate, manganese chloride, or manganese nitrate.

Preferably, the solvent includes deionized water.

Preferably, the complexing agent has a concentration of 1-3 mol/L, such as 1 mol/L, 1.5 mol/L, 2 mol/L, 2.5 mol/L, or 3 mol/L; however, the concentration is not limited to the listed values, and other unlisted values within the numerical range are also applicable.

Preferably, the complexing agent includes an ammonia complexing agent.

In the present application, the ammonia complexing agent solution is formulated by mixing aqueous ammonia with deionized water.

Preferably, the precipitant has a concentration of 1-3 mol/L, such as 1 mol/L, 1.5 mol/L, 2 mol/L, 2.5 mol/L, or 3 mol/L; however, the concentration is not limited to the listed values, and other unlisted values within the numerical range are also applicable.

Preferably, the precipitant includes an alkali solution.

Preferably, the alkali solution includes a sodium hydroxide solution or a potassium hydroxide solution.

In the present application, the precipitant solution is formulated by dissolving the precipitant particles in deionized water.

As a preferred technical solution of the present application, the first metal salt mixed solution is injected at a flow rate of 8-12 kg/h into the reaction device during the primary co-precipitation reaction, such as 8 kg/h, 8.5 kg/h, 9 kg/h, 9.5 kg/h, 10 kg/h, 10.5 kg/h, 11 kg/h, 11.5 kg/h, or 12 kg/h; however, the flow rate is not limited to the listed values, and other unlisted values within the numerical range are also applicable.

Preferably, the complexing agent solution is injected at a flow rate of 1-3 kg/h into the reaction device during the primary co-precipitation reaction, such as 1 kg/h, 1.5 kg/h, 2 kg/h, 2.5 kg/h, or 3 kg/h; however, the flow rate is not limited to the listed values, and other unlisted values within the numerical range are also applicable.

Preferably, the precipitant solution is injected at a flow rate of 2.4-3 kg/h into the reaction device during the primary co-precipitation reaction, such as 2.4 kg/h, 2.5 kg/h, 2.6 kg/h, 2.7 kg/h, 2.8 kg/h, 2.9 kg/h, or 3 kg/h; however, the flow rate is not limited to the listed values, and other unlisted values within the numerical range are also applicable.

During the primary co-precipitation reaction in the present application, the flow rate of the first metal salt mixed solution is limited to 8-12 kg/h, the flow rate of the complexing agent solution is limited to 1-3 kg/h, and the flow rate of the precipitant solution is limited to 2.4-3 kg/h; due to the flow rate coordination among the first metal salt solution, the complexing agent solution, and the precipitant solution, the primary co-precipitation reaction can maintain pH stability (i.e., the stability of the precipitant concentration of the solution inside the reaction device) as well as the stability of the complexing agent concentration of the solution inside the reaction device, and thereby the system stability of the entire primary co-precipitation reaction process can be maintained, which is conducive to the formation of loose core structure assembled by flaky primary particles; it is avoided to add all the required first metal salt mixed solution, complexing agent solution, and precipitant solution to the reaction device before co-precipitation, in which case the continuous consumption of the precipitant and complexing agent will lead to a constant decrease in the pH and complexing agent concentration of the co-precipitation reaction, the system stability will be bad, and it is difficult to accurately control the composition and morphology of the core.

Preferably, the primary co-precipitation reaction is carried out at 40-60°C, such as 40°C, 45°C, 50°C, 55°C, or 60°C; however, the temperature is not limited to the listed values, and other unlisted values within the numerical range are also applicable.

Preferably, the pH of the solution inside the reaction device is 9.5-11 during the primary co-precipitation reaction process, such as 9.5, 10, 10.5, or 11; however, the pH is not limited to the listed values, and other unlisted values within the numerical range are also applicable.

Preferably, a concentration of the complexing agent in the solution inside the reaction device is 7-11 g/L during the primary co-precipitation reaction process, such as 7 g/L, 7.5 g/L, 8 g/L, 8.5 g/L, 9 g/L, 9.5 g/L, 10 g/L, 10.5 g/L, or 11 g/L; however, the concentration is not limited to the listed values, and other unlisted values within the numerical range are also applicable.

Because of the flow rate coordination among the first metal salt solution, the complexing agent solution, and the precipitant solution in the present application, it is realized to control the pH of the primary co-precipitation reaction at 9.5-11 and to control the complexing agent concentration at 7-11 g/L, wherein the pH is mainly used to regulate the crystal nucleation rate in the primary co-precipitation reaction, and the complexing agent concentration is mainly used to regulate the crystal growth rate in the primary co-precipitation reaction; by controlling the pH and complexing agent concentration in suitable ranges, the rates of crystal nucleation and crystal growth can reach a dynamic balance, which is conducive to the generation of loose core structure assembled by flaky primary particles, and can also effectively control the uniform of the core particle size.

Preferably, the primary co-precipitation reaction is carried out with stirring.

Preferably, the primary co-precipitation reaction is carried out at a stirring speed of 300-380 r/min, such as 300 r/min, 310 r/min, 320 r/min, 330 r/min, 340 r/min, 350 r/min, 360 r/min, 370 r/min, or 380 r/min; however, the stirring speed is not limited to the listed values, and other unlisted values within the numerical range are also applicable.

In the present application, the stirring rotational speed of the primary co-precipitation reaction is limited to 300-380 r/min; when the rotational speed is lower than 300 r/min, the secondary particles will seriously agglomerate together and have inferior sphericity; when the rotational speed is higher than 380 r/min, the particle size will be difficult to increase in the co-precipitation process, and at the same time, micro-powders are easy to produce and thus affect the electrochemical performance of the positive electrode material.

In the present application, the spherical/spheroidal core assembled by flaky primary particles can be better prepared by controlling the pH and complexing agent concentration of the solution inside the reaction device during the primary co-precipitation reaction process and synergistically employing a suitable stirring rotational speed.

Preferably, the primary co-precipitation reaction is carried out for a period of 60-90 h, such as 60 h, 65 h, 70 h, 75 h, 80 h, 85 h, or 90 h; however, the period is not limited to the listed values, and other unlisted values within the numerical range are also applicable.

Preferably, before the primary co-precipitation reaction, deionized water, the complexing agent solution, and the precipitant solution are added to the reaction device as a bottom solution for the primary co-precipitation reaction.

In the present application, the deionized water, complexing agent solution, and precipitant solution are added to the reaction device in particular amounts as a bottom solution, which ensures that the crystal nucleation and growth proceed in a solution system and maintains the stability of the subsequent co-precipitation reaction system; the pH of the bottom solution is 10.5-11, and the concentration of the complexing agent is 7-10. When a 200 L reactor is used as the reaction device, the total amount of the bottom solution can be 100 L.

As a preferred technical solution of the present application, the second metal salt mixed solution is formulated by mixing a nickel salt, a manganese salt, and a solvent, or the second metal salt mixed solution is formulated by mixing an iron salt, a manganese salt, and a solvent.

Preferably, metal ions of the second metal salt mixed solution have a total concentration of 1-4 mol/L, such as 1 mol/L, 1.5 mol/L, 2 mol/L, 2.5 mol/L, 3 mol/L, 3.5 mol/L, or 4 mol/L; however, the total concentration is not limited to the listed values, and other unlisted values within the numerical range are also applicable.

Preferably, the nickel salt and the manganese salt have a molar ratio of a: (1-a), or the iron salt and the manganese salt have a molar ratio of a: (1-a), wherein 0.05 ≤ a ≤ 0.7, such as 0.05, 0.1, 0.2, 0.3, 0.4, 0.5, 0.6, or 0.7; however, the molar ratio is not limited to the listed values, and other unlisted values within the numerical range are also applicable.

Preferably, the nickel salt includes any one of nickel sulfate, nickel chloride, or nickel nitrate.

Preferably, the iron salt includes ferrous sulfate or ferrous chloride.

Preferably, the manganese salt includes any one of manganese sulfate, manganese chloride, or manganese nitrate.

Preferably, the solvent includes deionized water.

Preferably, the second metal salt mixed solution is injected at a flow rate of 8-12 kg/h into the reaction device during the secondary co-precipitation reaction, such as 8 kg/h, 8.5 kg/h, 9 kg/h, 9.5 kg/h, 10 kg/h, 10.5 kg/h, 11 kg/h, 11.5 kg/h, or 12 kg/h; however, the flow rate is not limited to the listed values, and other unlisted values within the numerical range are also applicable.

Preferably, the complexing agent solution is injected at a flow rate of 1-3 kg/h into the reaction device during the secondary co-precipitation reaction, such as 1 kg/h, 1.5 kg/h, 2 kg/h, 2.5 kg/h, or 3 kg/h; however, the flow rate is not limited to the listed values, and other unlisted values within the numerical range are also applicable.

Preferably, the precipitant solution is injected at a flow rate of 2.4-3 kg/h into the reaction device during the secondary co-precipitation reaction, such as 2.4 kg/h, 2.5 kg/h, 2.6 kg/h, 2.7 kg/h, 2.8 kg/h, 2.9 kg/h, or 3 kg/h; however, the flow rate is not limited to the listed values, and other unlisted values within the numerical range are also applicable.

Similarly, due to the flow rate coordination among the second metal salt solution, the complexing agent solution, and the precipitant solution, the secondary co-precipitation reaction can maintain pH stability as well as the stability of the complexing agent concentration, and thereby the system stability of the entire secondary co-precipitation reaction process can be maintained, which is conducive to the formation of loose shell structure assembled by flaky secondary particles around the core surface; it is avoided to add all the required second metal salt mixed solution, complexing agent solution, and precipitant solution to the reaction device before co-precipitation, in which case the continuous consumption of the precipitant and the complexing agent will lead to a constant decrease in the pH and complexing agent concentration during the co-precipitation reaction, the system stability will be bad, and it is difficult to accurately control the composition and morphology of the core. In addition, the complexing agent solution and the precipitant solution employed in the secondary co-precipitation reaction are the same as those employed in the primary co-precipitation reaction.

Preferably, the secondary co-precipitation reaction is carried out at 40-60°C, such as 40°C, 45°C, 50°C, 55°C, or 60°C; however, the temperature is not limited to the listed values, and other unlisted values within the numerical range are also applicable.

Preferably, the pH of the solution inside the reaction device is 8.5-11 during the secondary co-precipitation reaction, such as 8.5, 9, 9.5, 10, 10.5, or 11; however, the pH is not limited to the listed values, and other unlisted values within the numerical range are also applicable.

Preferably, a concentration of the complexing agent in the solution inside the reaction device is 8-12 g/L during the secondary co-precipitation reaction, such as 8 g/L, 8.5 g/L, 9 g/L, 9.5 g/L, 10 g/L, 10.5 g/L, or 11 g/L; however, the concentration is not limited to the listed values, and other unlisted values within the numerical range are also applicable.

Similarly, in the present application, the pH is mainly used to regulate the crystal nucleation rate in the secondary co-precipitation reaction, and the complexing agent concentration is mainly used to regulate the crystal growth rate in the secondary co-precipitation reaction; by controlling the pH and complexing agent concentration in suitable ranges, the rates of crystal nucleation and crystal growth can be controlled, which is conducive to the generation of loose shell structure assembled by flaky primary particles around the core surface. Since the crystal particles on the core surface can be directly used as crystal seeds to grow the shell during the secondary co-precipitation process and the crystal growth is more difficult during the secondary co-precipitation process, the pH of the secondary co-precipitation is slightly lower than that of the primary co-precipitation, and the complexing agent concentration is slightly higher than that of the primary co-precipitation.

Preferably, the secondary co-precipitation reaction is carried out with stirring.

Preferably, the secondary co-precipitation reaction is carried out at a stirring speed of 250-350 r/min, such as 250 r/min, 260 r/min, 270 r/min, 280 r/min, 290 r/min, 300 r/min, 310 r/min, 320 r/min, 330 r/min, 340 r/min, or 350 r/min; however, the stirring speed is not limited to the listed values, and other unlisted values within the numerical range are also applicable.

In the present application, the stirring rotational speed of the secondary co-precipitation reaction is limited to 250-350 r/min; when the rotational speed is lower than 250 r/min, the secondary particles will seriously agglomerate together, the sphericity will be bad, and also the shell encapsulation will be uneven; when the rotational speed is higher than 350 r/min, the particles will have a limited growth rate, and at the same time, micro-powders are easy to produce and thus affect the electrochemical performance of the positive electrode material.

In the present application, the shell assembled by flaky primary particles can be better prepared by controlling the pH and complexing agent concentration of the solution inside the reaction device during the secondary co-precipitation reaction process and synergistically employing a suitable stirring rotational speed; accordingly, the spherical/spheroidal positive electrode material precursor can be obtained.

Preferably, the secondary co-precipitation reaction is carried out for a period of 2-8 h, such as 2 h, 3 h, 4 h, 5 h, 6 h, 7 h, or 8 h; however, the period is not limited to the listed values, and other unlisted values within the numerical range are also applicable.

In a third aspect, an embodiment of the present application provides a positive electrode material; the positive electrode material is prepared by the positive electrode material precursor described in the first aspect.

The positive electrode material includes an O3-phase core and a P2-phase shell wrapped around the O3-phase core; the O3-phase core is Na(NiₓFe_{y}Mn_{1-x-y})O₂, wherein 0.2 ≤ x ≤ 0.7 and 0.2 ≤ y ≤ 0.5, and the P2-phase shell is Na_{b}(MₐMn₁₋ₐ)O₂, wherein M is nickel or iron, 0.05 ≤ a ≤ 0.7, and 0.67 ≤ b ≤ 0.78; the O3-phase core and the P2-phase shell are both assembled by flaky primary particles.

The positive electrode material provided by the present application has a structure where the O3-phase core is wrapped with the P2-phase shell. Such structure combines the advantages of high capacity of the O3-phase and high stability of the P2-phase. The problem challenging sodium-ion positive electrode materials that the capacity and the stability are hard to improve concurrently is solved at the level of crystal structure. In addition, the particle size of the positive electrode material provided by the present application is approximately close to the particle size of the positive electrode material precursor.

Furthermore, the positive electrode material in the present application can be denoted as Na(NiₓFe_{y}Mn_{1-x-y})O₂@Na_{b}(MₐMn₁₋ₐ)O₂, which means that Na_{b}(MₐMn₁₋ₐ)O₂ is coated on the outer surface of Na(NiₓFe_{y}Mn_{1-x-y})O₂.

In a fourth aspect, an embodiment of the present application provides a preparation method for the positive electrode material described in the third aspect; the preparation method includes:
mixing the positive electrode material precursor, a dispersant, and a sodium source and then performing calcination to obtain the positive electrode material.

In the present application, the dispersant is added in the mixing process of the positive electrode material precursor and the sodium source, which drives the diffusion of sodium ions into the interior of positive electrode material precursor particles at a high temperature, and further facilitates the formation of the positive electrode material structure of an O3-phase core and a P2-phase shell; besides, the preparation method is simple, low-cost, and suitable for large-scale industrialized production.

As a preferred technical solution of the present application, the dispersant includes polyvinylpyrrolidone.

Preferably, the sodium source includes sodium carbonate.

Preferably, the positive electrode material precursor, the dispersant, and the sodium source are ground and mixed in a mortar.

Preferably, the calcination is carried out at a temperature of 800-1000°C, such as 800°C, 820°C, 850°C, 880°C, 900°C, 920°C, 950°C, 980°C, or 1000°C; however, the temperature is not limited to the listed values, and other unlisted values within the numerical range are also applicable.

Preferably, the calcination is carried out for a period of 12-20 h, such as 12 h, 13 h, 14 h, 15 h, 16 h, 17 h, 18 h, 19 h, or 20 h; however, the period is not limited to the listed values, and other unlisted values within the numerical range are also applicable.

In a fifth aspect, an embodiment of the present application provides a sodium-ion battery; the sodium-ion battery includes the positive electrode material described in the third aspect.

The sodium-ion battery prepared using the positive electrode material provided by the present application has significantly improved specific capacity and cycle stability. Hence, the electrochemical performance of the sodium-ion battery is further improved, and the industrialization of the sodium-ion battery is promoted.

Compared with the related technology, the beneficial effects of the embodiments of the present application are as follows:
by controlling the compositions of the core and the shell of the positive electrode material precursor provided by the embodiments of the present application, and combining the property that the loose structure assembled flaky primary particles is favorable for the diffusion of sodium ions to the interior during the calcination, the positive electrode material having heterogeneous structure of an O3-phase core and a P2-phase shell is obtained, wherein the O3-phase core can provide high capacity and the P2-phase shell can construct a stable interfacial layer; the synergistic effect of the two structure types endows the positive electrode material with both high capacity and high cycling stability and thereby further improves the electrochemical performance of the sodium-ion battery; besides, the preparation method for the positive electrode material provided by the present application is simple, low-cost, and suitable for large-scale industrialized production.

Other aspects can be understood upon reading and appreciating the drawings and detailed description.

### BRIEF DESCRIPTION OF DRAWINGS

The drawings are to provide further understanding of the technical solutions herein and form part of the specification, which are used in conjunction with embodiments of the present application to explain the technical solutions herein but do not constitute a limitation to the technical solutions.

FIG. 1 is an SEM image showing the positive electrode material precursor provided by Example 1 of the present application.

FIG. 2 is an SEM image showing the cross-sectional view of the positive electrode material precursor provided by Example 1 of the present application.

### DETAILED DESCRIPTION

The technical solutions of the present application are further described below in terms of embodiments. It should be apparent to those skilled in the art that the embodiments are merely an aid to understanding the present application and should not be regarded as a specific limitation to the present application.

### Example 1

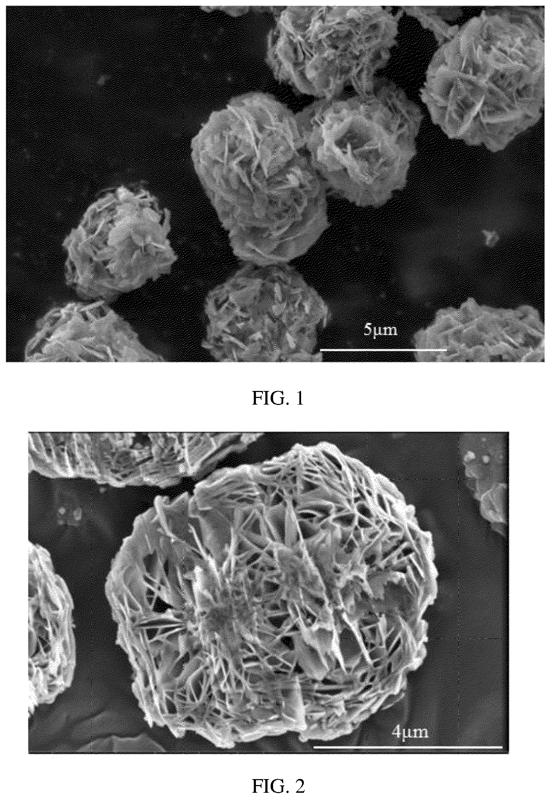

This example provides a preparation method for a positive electrode material, and the preparation method includes the following steps:
(1) nickel sulfate, ferrous sulfate, and manganese sulfate were dissolved in deionized water at a molar ratio of 0.25: 0.5: 0.25 to prepare a first metal salt mixed solution with a total metal ions concentration of 1 mol/L, ferrous sulfate and manganese sulfate were dissolved in deionized water at a molar ratio of 0.5: 0.5 to prepare a second metal salt mixed solution with a total metal ions concentration of 2 mol/L, and additionally, a 1 mol/L ammonia complexing agent solution and a 2 mol/L sodium hydroxide solution were prepared;
(2) deionized water, and the ammonia complexing agent solution and sodium hydroxide solution obtained in step (1) were added to a 200 L reactor as a bottom solution to maintain the system stability, wherein a total volume of the bottom solution was 100 L, a concentration of the ammonia complexing agent in the bottom solution was controlled in the range of 9-10 g/L, and the pH was controlled in the range of 10.6-11; then the first metal salt mixed solution, ammonia complexing agent solution, and sodium hydroxide solution were injected into the reactor at the same time at flow rates of 8 kg/h, 2 kg/h, and 2.5 kg/h, respectively, and a primary co-precipitation reaction was carried out at a temperature of 45°C and a stirring rotational speed of 340 r/min for 80 h, so as to obtain a Ni_{0.25}Fe_{0.5}Mn_{0.25}(OH)₂ core of positive electrode material precursor with an average particle size of 3.8 µm, wherein during the primary co-precipitation reaction, the pH of the solution inside the reactor was maintained in the range of 9.5-10, and a concentration of the complexing agent in the solution inside the reactor was maintained in the range of 8-10 g/L;
(3) the second metal salt mixed solution, ammonia complexing agent solution, and sodium hydroxide solution were injected into the reactor at the same time at flow rates of 8 kg/h, 2.3 kg/h, and 2.4 kg/h, respectively, and a secondary co-precipitation reaction was carried out at a temperature of 45°C and a stirring speed of 280 r/min for 4 h, so as to obtain a positive electrode material precursor of Ni_{0.25}Fe_{0.5} Mn_{0.25}(OH)₂@Fe_{0.5}Mn_{0.5}(OH)₂ with an average particle size of 4.2 µm, as shown in FIG. 1 and FIG. 2; during the secondary co-precipitation reaction, the pH of the solution inside the reactor was maintained in the range of 9.5-10.5, and a concentration of the complexing agent in the solution inside the reactor was maintained in the range of 9-11 g/L; and
(4) the positive electrode material precursor obtained in step (3), polyvinylpyrrolidone, and sodium carbonate were mixed uniformly in a mortar, and subsequently calcined at a temperature of 800°C for 18 h to obtain the positive electrode material with a chemical formula of Na(Ni_{0.25}Fe_{0.5}Mn_{0.25})O₂@Na_{2/3}(Fe_{0.5}Mn_{0.5})O₂.

### Example 2

This example provides a preparation method for a positive electrode material, and the preparation method includes the following steps:
(1) nickel sulfate, ferrous sulfate, and manganese sulfate were dissolved in deionized water at a molar ratio of 1/3: 1/3: 1/3 to prepare a first metal salt mixed solution with a total metal ions concentration of 1 mol/L, ferrous sulfate and manganese sulfate were dissolved in deionized water at a molar ratio of 0.7: 0.3 to prepare a second metal salt mixed solution with a total metal ions concentration of 2 mol/L, and additionally, a 2 mol/L ammonia complexing agent solution and a 2 mol/L sodium hydroxide solution were prepared;
(2) deionized water, and the ammonia complexing agent solution, and sodium hydroxide solution obtained in step (1) were added to a 200 L reactor as a bottom solution to maintain the system stability, wherein a total volume of the bottom solution was 100 L, a concentration of the ammonia complexing agent in the bottom solution was controlled in the range of 7-8 g/L, and the pH was controlled in the range of 10.5-11; then the first metal salt mixed solution, ammonia complexing agent solution, and sodium hydroxide solution were injected into the reactor at the same time at flow rates of 10 kg/h, 2.5 kg/h, and 2.8 kg/h, respectively, and a primary co-precipitation reaction was carried out at a temperature of 52°C and a stirring rotational speed of 350 r/min for 75 h, so as to obtain a Ni_{1/3}Fe_{1/3}Mn_{1/3}(OH)₂ core of positive electrode material precursor with an average particle size of 3.6 µm, wherein during the primary co-precipitation reaction, the pH of the solution inside the reactor was maintained in the range of 9.8-10.6, and a concentration of the complexing agent in the solution inside the reactor was maintained in the range of 8-10 g/L;
(3) the second metal salt mixed solution, ammonia complexing agent solution, and sodium hydroxide solution were injected into the reactor at the same time at flow rates of 10 kg/h, 3 kg/h, and 2.6 kg/h, respectively, and a secondary co-precipitation reaction was carried out at a temperature of 52°C and a stirring speed of 300 r/min for 8 h, so as to obtain a positive electrode material precursor of Ni_{1/3}F_{1/3}Mn_{1/3}(OH)₂@Fe_{0.7}Mn_{0.3}(OH)₂ with an average particle size of 4 µm, wherein during the secondary co-precipitation reaction, the pH of the solution inside the reactor was maintained in the range of 9.5-10.5, and a concentration of the complexing agent in the solution inside the reactor was maintained in the range of 9-11 g/L; and
(4) the positive electrode material precursor obtained in step (3), polyvinylpyrrolidone, and sodium carbonate were mixed uniformly in a mortar, and subsequently calcined at a temperature of 900°C for 16 h to obtain the positive electrode material with a chemical formula of Na(Ni_{1/3}Fe_{1/3}Mn_{1/3})O₂@Na_{0.7}(Fe_{0.7}Mn_{0.3})O₂.

### Example 3

This example provides a preparation method for a positive electrode material, and the preparation method includes the following steps:
(1) nickel sulfate, ferrous sulfate, and manganese sulfate were dissolved in deionized water at a molar ratio of 0.2: 0.5: 0.3 to prepare a first metal salt mixed solution with a total metal ions concentration of 3 mol/L, nickel sulfate and manganese sulfate were dissolved in deionized water at a molar ratio of 0.6: 0.4 to prepare a second metal salt mixed solution with a total metal ions concentration of 1 mol/L, and additionally, a 1 mol/L ammonia complexing agent solution and a 3 mol/L sodium hydroxide solution were prepared;
(2) deionized water, and the ammonia complexing agent solution and sodium hydroxide solution obtained in step (1) were added to a 200 L reactor as a bottom solution to maintain the system stability, wherein a total volume of the bottom solution was 100 L, a concentration of the ammonia complexing agent in the bottom solution was controlled in the range of 9-10 g/L, and the pH was controlled in the range of 10.6-11; then the first metal salt mixed solution, ammonia complexing agent solution, and sodium hydroxide solution were injected into the reactor at the same time at flow rates of 12 kg/h, 3 kg/h, and 2.4 kg/h, respectively, and a primary co-precipitation reaction was carried out at a temperature of 40°C and a stirring rotational speed of 380 r/min for 60 h, so as to obtain a Ni_{0.2}Fe_{0.3}Mn_{0.3}(OH)₂ core of positive electrode material precursor with an average particle size of 2 µm, wherein during the primary co-precipitation reaction, the pH of the solution inside the reactor was maintained in the range of 9.8-11, and a concentration of the complexing agent in the solution inside the reactor was maintained in the range of 7-9 g/L;
(3) the second metal salt mixed solution, ammonia complexing agent solution, and sodium hydroxide solution were injected into the reactor at the same time at flow rates of 12 kg/h, 3 kg/h, and 2.4 kg/h, respectively, and a secondary co-precipitation reaction was carried out at a temperature of 40°C and a stirring speed of 350 r/min for 2 h, so as to obtain a positive electrode material precursor of Ni_{0.2}Fe_{0.5}Mn_{0.3}(OH)₂@Ni_{0.6}Mn_{0.4}(OH)₂ with an average particle size of 2.5 µm, wherein during the secondary co-precipitation reaction, the pH of the solution inside the reactor was maintained in the range of 8.5-9.5, and a concentration of the complexing agent in the solution inside the reactor was maintained in the range of 8-10 g/L; and
(4) the positive electrode material precursor obtained in step (3), polyvinylpyrrolidone, and sodium carbonate were mixed uniformly in a mortar, and subsequently calcined at a temperature of 1000°C for 12 h to obtain the positive electrode material with a chemical formula of Na(Ni_{0.2}Fe_{0.5}Mn_{0.3})O₂@Na_{0.78}(Ni_{0.6}Mn_{0.4})O₂.

### Example 4

This example provides a preparation method for a positive electrode material, and the preparation method includes the following steps:
(1) nickel sulfate, ferrous sulfate, and manganese sulfate were dissolved in deionized water at a molar ratio of 0.7: 0.2: 0.1 to prepare a first metal salt mixed solution with a total metal ions concentration of 4 mol/L, ferrous sulfate and manganese sulfate were dissolved in deionized water at a molar ratio of 0.1: 0.9 to prepare a second metal salt mixed solution with a total metal ions concentration of 4 mol/L, and additionally, a 1 mol/L ammonia complexing agent solution and a 3 mol/L sodium hydroxide solution were prepared;
(2) deionized water, and the ammonia complexing agent solution and sodium hydroxide solution obtained in step (1) were added to a 200 L reactor as a bottom solution to maintain the system stability, wherein a total volume of the bottom solution was 100 L, a concentration of the ammonia complexing agent in the bottom solution was controlled in the range of 9-10 g/L, and the pH was controlled in the range of 10.6-11; then the first metal salt mixed solution, ammonia complexing agent solution, and sodium hydroxide solution were injected into the reactor at the same time at flow rates of 11 kg/h, 1 kg/h, and 3 kg/h, respectively, and a primary co-precipitation reaction was carried out at a temperature of 60°C and a stirring rotational speed of 300 r/min for 90 h, so as to obtain a Ni_{0.7}Fe_{0.2}Mn_{0.1}(OH)₂ core of positive electrode material precursor with an average particle size of 4 µm, wherein during the primary co-precipitation reaction, the pH of the solution inside the reactor was maintained in the range of 9.5-11, and a concentration of the complexing agent in the solution inside the reactor was maintained in the range of 9-11 g/L;
(3) the second metal salt mixed solution, ammonia complexing agent solution, and sodium hydroxide solution were injected into the reactor at the same time at flow rates of 11 kg/h, 1 kg/h, and 3 kg/h, respectively, and a secondary co-precipitation reaction was carried out at a temperature of 60°C and a stirring speed of 250 r/min for 6 h, so as to obtain a positive electrode material precursor of Ni_{0.7}Fe_{0.2}Mn_{0.1}(OH)₂@Fe_{0.1}Mn_{0.9}(OH)₂ with an average particle size of 4.5 µm, wherein during the secondary co-precipitation reaction, the pH of the solution inside the reactor was maintained in the range of 10-11, and a concentration of the complexing agent in the solution inside the reactor was maintained in the range of 10-12 g/L; and
(4) the positive electrode material precursor obtained in step (3), polyvinylpyrrolidone, and sodium carbonate were mixed uniformly in a mortar, and subsequently calcined at a temperature of 800°C for 20 h to obtain the positive electrode material with a chemical formula of Na(Ni_{0.7}Fe_{0.2}Mn_{0.1})O₂@Na_{2/3}(Fe_{0.1}Mn_{0.9})O₂.

### Example 5

This example differs from Example 1 in that the flow rate of the sodium hydroxide solution in step (2) was 3.5 kg/h, and the pH of the solution inside the reactor was maintained in the range of 11.5-12.5 during the primary co-precipitation reaction; other process parameters and operating conditions are the same as those of Example 1.

### Example 6

This example differs from Example 1 in that the flow rate of the sodium hydroxide solution in step (2) was 2 kg/h, and the pH of the solution inside the reactor was maintained in the range of 8-9.2 during the primary co-precipitation reaction; other process parameters and operating conditions are the same as those of Example 1.

### Example 7

This example differs from Example 1 in that the flow rate of the ammonia complexing agent solution in step (2) was 4 kg/h, and the concentration of the complexing agent in the solution inside the reactor was maintained in the range of 11.5-13.5 during the primary co-precipitation reaction; other process parameters and operating conditions are the same as those of Example 1.

### Example 8

This example differs from Example 1 in that the flow rate of the ammonia complexing agent solution in step (2) was 0.5 kg/h, and the concentration of the complexing agent in the solution inside the reactor was maintained in the range of 5-6.5 during the primary co-precipitation reaction; other process parameters and operating conditions are the same as those of Example 1.

### Example 9

This example differs from Example 1 in that the flow rate of the sodium hydroxide solution in step (3) was 3.5 kg/h, and the pH of the solution inside the reactor was maintained in the range of 11.7-12.5 during the secondary co-precipitation reaction; other process parameters and operating conditions are the same as those of Example 1.

### Example 10

This example differs from Example 1 in that the flow rate of the sodium hydroxide solution in step (3) was 2 kg/h, and the pH of the solution inside the reactor was maintained in the range of 6.5-8 during the secondary co-precipitation reaction; other process parameters and operating conditions are the same as those of Example 1.

### Example 11

This example differs from Example 1 in that the flow rate of the ammonia complexing agent solution in step (3) was 4.5 kg/h, and the concentration of the complexing agent in the solution inside the reactor was maintained in the range of 12.5-14.5 during the primary co-precipitation reaction; other process parameters and operating conditions are the same as those of Example 1.

### Example 12

This example differs from Example 1 in that the flow rate of the ammonia complexing agent solution in step (3) was 0.3 kg/h, and the concentration of the complexing agent in the solution inside the reactor was maintained in the range of 6-7.5 during the primary co-precipitation reaction; other process parameters and operating conditions are the same as those of Example 1.

### Example 13

This example differs from Example 1 in that polyvinylpyrrolidone was not added in step (4); other process parameters and operating conditions are the same as those of Example 1.

### Comparative Example 1

This comparative example differs from Example 1 in that in step (2), the first metal salt mixed solution, ammonia complexing agent solution, and sodium hydroxide solution required were all added to the reactor, and then the primary co-precipitation reaction was carried out; other process parameters and operating conditions are the same as those of Example 1.

### Comparative Example 2

This comparative example differs from Example 1 in that in step (3), the second metal salt mixed solution, ammonia complexing agent solution, and sodium hydroxide solution required were all added to the reactor, and then the secondary co-precipitation reaction was carried out; other process parameters and operating conditions are the same as those of Example 1.

The positive electrode materials prepared in Examples 1-13 and Comparative Examples 1-2 were assembled into button cells and subjected to electrochemical performance tests.

The performance test parameters are as follows.
(1) Reversible capacity test: initial charge/discharge curve of half cells at a current density of 12.5 (0.1 C) in a voltage range of 2-4.2 V
(2) Cycling performance test: 100 cycles of half cells at 1C in a voltage range of 2-4.2 V

Test results of electrochemical performance of button cells assembled with positive electrode materials prepared in Examples 1-13 and Comparative Examples 1-2 are shown in Table 1.

**Table 1**

| | Reversible Capacity (mA/hg) | Capacity Retention after 100 Cycles at 0.1C /% |
|---|---|---|
| Example 1 | 125.89 | 92.61% |
| Example 2 | 142.16 | 90.25% |
| Example 3 | 130.56 | 90.76% |
| Example 4 | 154.23 | 92.69% |
| Example 5 | 123.56 | 89.23% |
| Example 6 | 124.75 | 88.54% |
| Example 7 | 126.84 | 87.75% |
| Example 8 | 119.58 | 88.73% |
| Example 9 | 124.61 | 84.41 % |
| Example 10 | 121.49 | 85.76% |
| Example 11 | 117.51 | 84.64% |
| Example 12 | 119.48 | 86.68% |
| Example 13 | 117.59 | 88.69% |
| Comparative Example 1 | 116.42 | 82.59% |
| Comparative Example 2 | 115.39 | 80.57% |

As can be seen from Table 1:
(1) The positive electrode materials prepared in Examples 1-4 have a high reversible capacity and excellent cycling performance, which indicates that the preparation method provided by the present application is capable of yielding the positive electrode material having a heterogeneous structure of an O3-phase core and a P2-phase shell, wherein the O3-phase core provides high capacity and the P2-phase shell constructs a stable interfacial layer; the synergistic effect of the two structure types endows the positive electrode material with both high capacity and high cycling stability and thereby further improves the electrochemical performance of the sodium-ion battery.
(2) The capacity and cycling performance of the positive electrode materials prepared in Examples 5-8 are both lower than those of Example 1, because the precipitant flow rate in the primary co-precipitation is overly high in Example 5, the precipitant flow rate in the primary co-precipitation is overly low in Example 6, the complexing agent flow rate in the primary co-precipitation is overly high in Example 7, and the complexing agent flow rate in the primary co-precipitation is overly low in Example 8; which indicates that the flow rates of precipitant and complexing agent in the primary co-precipitation are controlled in their respective suitable ranges in the present application, which can better maintain the system stability during the entire primary co-precipitation reaction process, and facilitate the formation of loose core structure assembled by flaky primary particles, and thereby further improves the electrochemical performance of the positive electrode material.
(3) The capacity and cycling performance of the positive electrode materials prepared in Examples 9-12 are both lower than those of Example 1, because the precipitant flow rate in the secondary co-precipitation is overly high in Example 9, the precipitant flow rate in the secondary co-precipitation is overly low in Example 10, the complexing agent flow rate in the secondary co-precipitation is overly high in Example 11, and the complexing agent flow rate in the secondary co-precipitation is overly low in Example 12; which indicates that the flow rates of precipitant and complexing agent in the secondary co-precipitation are controlled in their respective suitable ranges in the present application, which can maintain the system stability during the entire secondary co-precipitation reaction process, thereby facilitating the formation of loose shell structure assembled by flaky primary particles around the core surface, and further improves the electrochemical performance of the positive electrode material.
(4) The capacity and cycling performance of the positive electrode material prepared in Example 13 are both lower than those of Example 1, because the dispersant is not added in the calcination process in Example 13, and the calcination cannot effectively drive the diffusion of sodium ions into the interior of precursor particles, thereby affecting the electrochemical performance of the positive electrode material.
(5) The capacity and cycling performance of the positive electrode materials prepared in Comparative Examples 1-2 are both lower than those of Example 1, because the first metal salt mixed solution, the complexing agent solution, and the precipitant solution are all added to the reactor for the primary co-precipitation reaction in Comparative Example 1, and the second metal salt mixed solution, the complexing agent solution, and the precipitant solution are all added to the reactor for the secondary co-precipitation reaction in Comparative Example 2; hence, the pH stability and complexing agent concentration stability of the primary co-precipitation reaction and secondary co-precipitation reaction are unable to be maintained, the rates of crystal nucleation and crystal growth are out of control during the primary co-precipitation reaction and secondary co-precipitation reaction, the positive electrode material precursor having loose structure assembled by flaky primary particles cannot be prepared, and thereby the electrochemical performance of the positive electrode material is affected.

The applicant declares that although embodiments of the present application are described above, the protection scope of the present application is not limited thereto. It should be apparent to the skilled person in the art that any change or substitution which can be anticipated by the skilled person in the art under the technical concepts disclosed by the present application shall fall within the protection scope and disclosure scope of the present application.

## Claims

1. A positive electrode material precursor, comprising a core and a shell wrapped around the core; the core is NiₓFe_{y}Mn_{1-x-y}(OH)₂, wherein 0.2 ≤ x ≤ 0.7, and 0.2 ≤ y ≤ 0.5, and the shell is MₐMn₁₋ₐ(OH)₂, wherein M is nickel or iron, and 0.05 ≤ a ≤ 0.7; and the core and the shell are both assembled by flaky primary particles.

2. The positive electrode material precursor according to claim 1, wherein a morphology of the core of the positive electrode material precursor comprises a spherical type or a spheroidal type.

3. The positive electrode material precursor according to claim 1 or 2, wherein the core of the positive electrode material precursor has a particle size of 2-4.5 µm.

4. The positive electrode material precursor according to any one of claims 1-3, wherein a morphology of the positive electrode material precursor comprises a spherical type or a spheroidal type.

5. The positive electrode material precursor according to any one of claims 1-4, wherein the positive electrode material precursor has a particle size of 2.5-4.5 µm.

6. A preparation method for the positive electrode material precursor according to any one of claims 1-5, comprising:
injecting a first metal salt mixed solution, a complexing agent solution, and a precipitant solution simultaneously into a reaction device, carrying out a primary co-precipitation reaction during the injection to obtain the core of the positive electrode material precursor, subsequently injecting a second metal salt mixed solution, the complexing agent solution, and the precipitant solution simultaneously into the reaction device, and carrying out a secondary co-precipitation reaction during the injection to obtain the positive electrode material precursor.

7. The preparation method according to claim 6, wherein the first metal salt mixed solution is formulated by mixing a nickel salt, an iron salt, a manganese salt, and a solvent.

8. The preparation method according to claim 6 or 7, wherein metal ions of the first metal salt mixed solution have a total concentration of 1-4 mol/L.

9. The preparation method according to any one of claims 6-8, wherein the nickel salt, the iron salt, and the manganese salt have a molar ratio of x: y: (1-x-y), wherein 0.2 ≤ x ≤ 0.7 and 0.2 ≤ y ≤ 0.5.

10. The preparation method according to any one of claims 6-9, wherein the nickel salt comprises any one of nickel sulfate, nickel chloride, or nickel nitrate;
preferably, the iron salt comprises ferrous sulfate or ferrous chloride;
preferably, the manganese salt comprises any one of manganese sulfate, manganese chloride, or
manganese nitrate;
preferably, the solvent comprises deionized water;
preferably, the complexing agent has a concentration of 1-3 mol/L;
preferably, the complexing agent comprises an ammonia complexing agent;
preferably, the precipitant has a concentration of 1-3 mol/L;
preferably, the precipitant comprises an alkali solution;
preferably, the alkali solution comprises a sodium hydroxide solution or a potassium hydroxide solution.

11. The preparation method according to any one of claims 6-10, wherein the first metal salt mixed solution is injected at a flow rate of 8-12 kg/h into the reaction device during the primary co-precipitation reaction;
preferably, the complexing agent solution is injected at a flow rate of 1-3 kg/h into the reaction device during the primary co-precipitation reaction;
preferably, the precipitant solution is injected at a flow rate of 2.4-3 kg/h into the reaction device during the primary co-precipitation reaction;
preferably, the primary co-precipitation reaction is carried out at 40-60°C;
preferably, a pH of the solution inside the reaction device is 9.5-11 during the primary co-precipitation reaction process;
preferably, a concentration of the complexing agent in the solution inside the reaction device is 7-11 g/L during the primary co-precipitation reaction process;
preferably, the primary co-precipitation reaction is carried out with stirring;
preferably, the primary co-precipitation reaction is carried out at a stirring rotational speed of 300-380 r/min;
preferably, the primary co-precipitation reaction is carried out for a period of 60-90 h;
preferably, before the primary co-precipitation reaction, deionized water, the complexing agent solution, and the precipitant solution are added to the reaction device as a bottom solution for the primary co-precipitation reaction.

12. The preparation method according to any one of claims 6-11, wherein the second metal salt mixed solution is formulated by mixing a nickel salt, a manganese salt, and a solvent, or the second metal salt mixed solution is formulated by mixing an iron salt, a manganese salt, and a solvent;
preferably, metal ions of the second metal salt mixed solution have a total concentration of 1-4 mol/L;
preferably, the nickel salt and the manganese salt have a molar ratio of a: (1-a), or the iron salt and the manganese salt have a molar ratio of a: (1-a), wherein 0.05 ≤ a ≤ 0.7;
preferably, the nickel salt comprises any one of nickel sulfate, nickel chloride, or nickel nitrate;
preferably, the iron salt comprises ferrous sulfate or ferrous chloride;
preferably, the manganese salt comprises any one of manganese sulfate, manganese chloride, or manganese nitrate;
preferably, the solvent comprises deionized water;
preferably, the second metal salt mixed solution is injected at a flow rate of 8-12 kg/h into the reaction device during the secondary co-precipitation reaction;
preferably, the complexing agent solution is injected at a flow rate of 1-3 kg/h into the reaction device during the secondary co-precipitation reaction;
preferably, the precipitant solution is injected at a flow rate of 2.4-3 kg/h into the reaction device during the secondary co-precipitation reaction;
preferably, the secondary co-precipitation reaction is carried out at 40-60°C;
preferably, a pH of the solution inside the reaction device is 8.5-11 during the secondary co-precipitation reaction process;
preferably, a concentration of the complexing agent in the solution inside the reaction device is 8-12 g/L during the secondary co-precipitation reaction process;
preferably, the secondary co-precipitation reaction is carried out with stirring;
preferably, the secondary co-precipitation reaction is carried out at a stirring rotational speed of 250-350 r/min;
preferably, the secondary co-precipitation reaction is carried out for a period of 2-8 h.

13. A positive electrode material, which is prepared by the positive electrode material precursor according to any one of claims 1-5;
the positive electrode material comprises an O3-phase core and a P2-phase shell wrapped around the O3-phase core; the O3-phase core is Na(NiₓFe_{y}Mn_{1-x-y})O₂, wherein 0.2 ≤ x ≤ 0.7 and 0.2 ≤ y ≤ 0.5, and the P2-phase shell is Na_{b}(MₐMn₁₋ₐ)O₂, wherein M is nickel or iron, 0.05 ≤ a ≤ 0.7, and 0.67 ≤ b ≤ 0.78; the O3-phase core and the P2-phase shell are both assembled by flaky primary particles.

14. A preparation method for the positive electrode material according to claim 13, comprising:
mixing the positive electrode material precursor, a dispersant, and a sodium source and then performing calcination to obtain the positive electrode material.

15. The preparation method according to claim 14, wherein the dispersant comprises polyvinylpyrrolidone;
preferably, the sodium source comprises sodium carbonate;
preferably, the positive electrode material precursor, the dispersant, and the sodium source are ground and mixed in a mortar;
preferably, the calcination is carried out at a temperature of 800-1000°C;
preferably, the calcination is carried out for a period of 12-20 h.

16. A sodium-ion battery, which comprises the positive electrode material according to claim 13.
